# EUROPEAN PATENT APPLICATION

(11) **EP 4 831 244 A1**
(43) Date of publication of application: **28.10.2026**
(21) Application number: 24907963.3
(22) Date of filing: 10.12.2024
(51) Int. Cl.: C08L 69/00, C08L 83/06, C08K 7/14, C08G 64/18, C08G 77/16

(54) **POLYCARBONATE RESIN COMPOSITION AND ARTICLE PRODUCED THEREFROM**

(30) Priority: 21.12.2023 KR 20230188154
(71) Applicant: LOTTE CHEMICAL CORPORATION, Seoul 05551 (KR)
(72) Inventor: KIM, Nam Hyun, Uiwiang-si Gyeonggi-do 16073 (KR); KANG, Tae Gon, Uiwiang-si Gyeonggi-do 16073 (KR); SONG, Yoon Jung, Uiwiang-si Gyeonggi-do 16073 (KR); WOO, Eun Taek, Uiwiang-si Gyeonggi-do 16073 (KR); LEE, Han Sol, Uiwiang-si Gyeonggi-do 16073 (KR)
(74) Representative: Germain Maureau
(86) International application number: PCT/KR2024/020228
(87) International publication number: WO 2025/135679

(57) **Abstract**

A polycarbonate resin composition according to the present invention is characterized by comprising: about 100 parts by weight of a base resin including about 4 to about 96 wt% of a polycarbonate resin and about 4 to about 96 wt% of a polysiloxane-polycarbonate copolymer; about 5 to about 30 parts by weight of a glass fiber; and about 0.1 to about 2 parts by weight of a polydimethylsiloxane having a terminal reactive group and having a kinematic viscosity of about 5 to about 200 cSt as measured at 40°C in accordance with ASTM D445. The polycarbonate resin composition has excellent impact resistance, rigidity, chemical resistance, and appearance characteristics, as well as an excellent balance of these physical properties.

## Description

### [Technical Field]

The present invention relates to a polycarbonate resin composition and a molded article formed therefrom. More particularly, the present invention relates to a polycarbonate resin composition having excellent properties in terms of impact resistance, rigidity, chemical resistance, appearance characteristics, a balance of properties thereof, and the like, and a molded article formed therefrom.

### [Background Art]

Due to excellent mechanical strength, heat resistance, transparency, and the like, polycarbonate resins are widely applied to various fields including office automation devices, electrical/electronic products, construction materials, and the like. As a recent trend in mobile electrical/electronic products such as mobile phones, battery-integrated products are increasingly produced using metal instead of plastic for their superior design, lightness, and waterproof functions. However, there is still demand for products that utilize plastic materials for batteries and rear covers to ensure affordability and stability. In particular, the application of plastic materials to rear covers requires not only high rigidity and impact resistance to prevent issues like liquid crystal breakage and the like, but also clear coating or post-injection painting processes to achieve various colors and daily scratch protection.

To improve rigidity and other properties of plastic materials, a polycarbonate resin reinforced with inorganic fillers, such as glass fiber, is used in the art. However, an excess of glass fiber can deteriorate impact resistance, appearance characteristics, and efficiency and effects of a painting process.

Therefore, there is a need for development of a polycarbonate resin composition that has excellent properties in terms of impact resistance, rigidity, chemical resistance, appearance characteristics, a balance of properties thereof, and the like.

The background technique of the present invention is disclosed in Korean Patent Laid-open Publication No. 10-2022-0056273 and the like.

### [Disclosure]

### [Technical Problem]

It is one object of the present invention to provide a polycarbonate resin composition that has excellent properties in terms of impact resistance, rigidity, chemical resistance, appearance characteristics, a balance of properties thereof, and the like.

It is another object of the present invention to provide a molded article formed from the polycarbonate resin composition.

The above and other objects of the present invention can be achieved by the present invention described below.

### [Technical Solution]

1. One aspect of the present invention relates to a thermoplastic resin composition. The polycarbonate resin comprises: about 100 parts by weight of a base resin comprising about 4 wt% to about 96 wt% of a polycarbonate resin and about 4 wt% to about 96 wt% of a polysiloxane-polycarbonate copolymer resin; about 5 to about 30 parts by weight of glass fiber; and about 0.1 to about 2 parts by weight of a polydimethylsiloxane containing a terminal reactive group and having a kinematic viscosity of about 5 cSt to about 200 cSt, as measured at 40°C in accordance with ASTM D445.
2. In embodiment 1, the polycarbonate resin may have a weight average molecular weight of about 10,000 g/mol to about 200,000 g/mol, as measured by gel permeation chromatography (GPC).
3. In embodiment 1 or 2, the polysiloxane-polycarbonate copolymer resin may comprise about 70 wt% to about 99 wt% of a polycarbonate block and about 1 wt% to about 30 wt% of a polysiloxane block.
4. In embodiments 1 to 3, the polycarbonate-polysiloxane copolymer resin may have a weight average molecular weight of about 10,000 g/mol to about 50,000 g/mol, as measured by gel permeation chromatography (GPC).
5. In embodiments 1 to 4, the terminal reactive group of the polydimethylsiloxane may comprise at least one of a hydroxyl group, an epoxy group, and a maleic anhydride group.
6. In embodiments 1 to 5, a weight ratio of the polycarbonate-polysiloxane copolymer resin to the glass fiber may range from about 1:0.05 to about 1:5.
7. In embodiments 1 to 6, a weight ratio of the polysiloxane-polycarbonate copolymer resin to the polydimethylsiloxane containing a terminal reactive group may range from about 1:0.005 to about 1:0.5.
8. In embodiments 1 to 7, a weight ratio of the glass fiber to the polydimethylsiloxane containing a terminal reactive group may range from about 1:0.01 to about 1:0.3.
9. In embodiments 1 to 8, the polycarbonate resin composition may have a notched Izod impact strength of about 14 kgf·cm/cm to about 30 kgf·cm/cm, as measured on a 1/8" thick specimen in accordance with ASTM D256.
10. In embodiments 1 to 9, the polycarbonate resin composition may have a flexural modulus of about 25,000 kgf/cm² or more, as measured on a 1/4" thick specimen at a rate of 2.8 mm/min in accordance with ASTM D790.
11. In embodiments 1 to 10, the polycarbonate resin composition may have a fracture height of about 55 cm or higher, at which a 2 mm thick specimen is broken upon application of impact with a drop test device using a 2 kg weight according to a DuPont drop test method after the specimen is immersed in a thinner solution for 2 minutes and 30 seconds, dried at 80°C for 20 minutes, and left at room temperature for 24 hours.
12. In embodiments 1 to 11, the polycarbonate resin composition may have a time until cracking occurs on a surface of a specimen of about 60 min or more, when 5 g of sunscreen (manufacturer: Nivea, product name: NNAH03055) is applied to a 1/8" thick Type I tensile specimen prepared in accordance with ASTM D638, and the specimen is left on a 1% strain curvature jig.
13. Another aspect of the present invention relates to a molded article. The molded article is formed from the polycarbonate resin composition according to any one of embodiments 1 to 12.

### [Advantageous Effects]

The present invention provides a polycarbonate resin composition that has excellent properties in terms of impact resistance, rigidity, chemical resistance, appearance characteristics, a balance of properties thereof, and the like, and a molded article formed therefrom.

### [Best Mode]

Hereinafter, embodiments of the present invention will be described in detail.

A polycarbonate resin composition according to the present invention comprises (A) a polycarbonate resin; (B) a polysiloxane-polycarbonate copolymer resin; (C) glass fiber; and (D) a polydimethylsiloxane containing a terminal reactive group.

As used herein to represent a numerical range, "a to b" is defined as "≥ a and ≤ b".

### (A) Polycarbonate resin

The polycarbonate resin according to one embodiment of the present invention may include any polycarbonate resin used in typical thermoplastic resin compositions. For example, the polycarbonate resin may be an aromatic polycarbonate resin prepared by reacting diphenols (aromatic diol compounds) with a carbonate precursor, such as phosgene, halogen formate, and carbonate diester.

In some embodiments, the diphenols may include, for example, 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis-(3,5-dichloro-4-hydroxyphenyl)propane, 2,2-bis(3-methyl-4-hydroxyphenyl)propane, 2,2-bis(3,5-dimethyl-4-hydroxyphenyl)propane, and the like, without being limited thereto. For example, the diphenol may be 2,2-bis(4-hydroxyphenyl)propane, 2,2-bis(3,5-dichloro-4-hydroxyphenyl)propane, 2,2-bis(3-methyl-4-hydroxyphenyl)propane, 2,2-bis(3,5-dimethyl-4-hydroxyphenyl)propane, or 1,1-bis(4-hydroxyphenyl)cyclohexane, specifically 2,2-bis(4-hydroxyphenyl)propane, which is also referred to as bisphenol-A.

In some embodiments, the carbonate precursors may include dimethyl carbonate, diethyl carbonate, dibutyl carbonate, dicyclohexyl carbonate, diphenyl carbonate, ditolyl carbonate, bis(chlorophenyl) carbonate, m-cresyl carbonate, dinaphthyl carbonate, carbonyl chloride (phosgene), diphosgene, triphosgene, carbonyl bromide, bishaloformate, and the like. These may be used alone or as mixtures thereof.

In some embodiments, the polycarbonate resin may be a branched polycarbonate resin. For example, the polycarbonate resin may be a polycarbonate resin prepared by adding a tri- or higher polyfunctional compound, specifically, a tri- or higher valent phenol group-containing compound, in an amount of about 0.05 mol% to about 2 mol% based on the total number of moles of the diphenols used in polymerization.

In some embodiments, the polycarbonate resin may be a homopolycarbonate resin, a copolycarbonate resin, or a blend thereof. In addition, the polycarbonate resin may be partly or completely replaced by an aromatic polyester-carbonate resin obtained by polymerization in the presence of an ester precursor, for example, a bifunctional carboxylic acid.

In some embodiments, the polycarbonate resin may have a weight average molecular weight (Mw) of about 10,000 g/mol to about 200,000 g/mol, for example, about 15,000 g/mol to about 100,000 g/mol, as measured by gel permeation chromatography (GPC). Within this range, the polycarbonate resin composition can have good mechanical properties, heat resistance, and the like.

In some embodiments, the polycarbonate resin may be present in an amount of about 4 wt% to about 96 wt%, specifically about 5 wt% to about 95 wt%, based on 100 wt% of a base resin (A+B) comprising the polycarbonate resin and the polysiloxane-polycarbonate copolymer resin. If the content of the polycarbonate resin is less than 4 wt% based on 100 wt% of the base resin, the polycarbonate resin composition can suffer from deterioration in impact resistance, chemical resistance, and the like, and if the content of the polycarbonate resin exceeds about 96 wt%, the polycarbonate resin composition can suffer from deterioration in chemical resistance, and the like.

### (B) Polysiloxane-polycarbonate copolymer resin

The polysiloxane-polycarbonate copolymer resin according to one embodiment of the present invention serves to improve impact resistance, rigidity, chemical resistance, appearance characteristics, a balance of properties thereof, and the like of the polycarbonate resin composition, when used together with the polycarbonate resin, the glass fiber, and the polydimethylsiloxane containing a terminal reactive group, and comprises a polycarbonate block and a polysiloxane block. For example, the polysiloxane-polycarbonate copolymer resin may be a triblock copolymer of a polycarbonate block/polysiloxane block/polycarbonate block, and the like, without being limited thereto.

In some embodiments, the polysiloxane-polycarbonate copolymer resin may be a polysiloxane-polycarbonate copolymer resin prepared by reacting a siloxane compound represented by Formula 1, an aromatic dihydroxy compound, and a carbonate precursor.

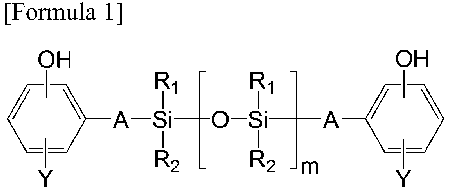

In Formula 1, R₁ and R₂ are each independently a C₁ to C₁₀ alkyl group, a C₆ to C₁₈ aryl group, or a C₁ to C₁₀ alkyl group or C₆ to C₁₈ aryl group having a halogen atom or an alkoxy group; As are each independently a substituted or unsubstituted C₂ to C₂₀ hydrocarbon group, a substituted or unsubstituted C₂ to C₂₀ hydrocarbon group having -O- or -S-; and Ys are each independently a hydrogen atom, a halogen atom, a C₁ to C₁₈ halogenated alkyl group, a cyano group (-CN), or an ester; and m may range from 2 to 1,000, for example, from 4 to 120, specifically from 10 to 100.

In some embodiments, the aromatic dihydroxy compound (diphenols) may be selected from any aromatic dihydroxy compounds typically used in preparation of polycarbonate resins, and may include, for example, 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, without being limited thereto. Specifically, the aromatic dihydroxy compound may be 2,2-bis(4-hydroxyphenyl)propane, 2,2-bis(3,5-dichloro-4-hydroxyphenyl)propane, 1,1-bis(4-hydroxyphenyl)cyclohexane, or the like, preferably 2,2-bis(4-hydroxyphenyl)propane, which is also referred to as bisphenol-A.

In some embodiments, the carbonate precursors may include phosgene, triphosgene, diaryl carbonate, mixtures thereof, and the like. Furthermore, the diaryl carbonates may include diphenyl carbonate, ditolyl carbonate, bis(chlorophenyl) carbonate, m-cresyl carbonate, dinaphthyl carbonate, bis(diphenyl) carbonate, diethyl carbonate, dimethyl carbonate, dibutyl carbonate, dicyclohexyl carbonate, and the like, without being limited thereto. These may be used alone or as a mixture thereof. For example, diphenyl carbonate may be used.

In some embodiments, the polycarbonate-polysiloxane copolymer resin may be present in an amount of about 70 wt% to about 99 wt%, for example, about 80 wt% to about 97 wt%, of a polycarbonate block derived from the aromatic dihydroxy compound, and about 1 wt% to about 30 wt%, for example, about 3 wt% to about 25 wt%, of a polysiloxane block derived from the siloxane compound. Within this range, the polycarbonate resin composition can exhibit excellent properties in terms of impact resistance, chemical resistance, flame retardancy, and the like.

In some embodiments, the polycarbonate-polysiloxane copolymer resin may have a weight average molecular weight (Mw) of about 10,000 g/mol to about 50,000 g/mol, for example, about 15,000 g/mol to about 40,000 g/mol, as measured by gel permeation chromatography (GPC). Within this range, the polycarbonate resin composition can have excellent properties in terms of impact resistance, chemical resistance, flame retardancy, moldability, and the like.

In some embodiments, the polycarbonate-polysiloxane copolymer resin may be prepared by a typical method. For example, the aromatic dihydroxy compound, the carbonate precursor, and the siloxane compound may be copolymerized by interfacial condensation polymerization, emulsion polymerization, and the like. In addition, the polysiloxane-polycarbonate copolymer resin may be obtained from commercially available products.

In some embodiments, the polysiloxane-polycarbonate copolymer resin may be present in an amount of about 4 wt% to about 96 wt%, specifically about 5 wt% to about 95 wt%, based on 100 wt% of the base resin (A+B) comprising the polycarbonate resin (A) and the polysiloxane-polycarbonate copolymer resin (B). If the content of the polysiloxane-polycarbonate copolymer is less than 4 wt% based on 100 wt% of the base resin, the polycarbonate resin composition can suffer from deterioration in chemical resistance, and the like, and if the content of the polysiloxane-polycarbonate copolymer exceeds about 96 wt%, the polycarbonate resin composition can suffer from deterioration in impact resistance, chemical resistance, and the like.

### (C) Glass fiber

The glass fiber according to one embodiment of the present invention serves to improve impact resistance, rigidity, chemical resistance, appearance characteristics, a balance of properties thereof, and the like of the polycarbonate resin composition, when used together with the polycarbonate resin, the polysiloxane-polycarbonate copolymer resin, and the polydimethylsiloxane containing a terminal reactive group, and may comprise glass fiber used in typical thermoplastic resin compositions.

In some embodiments, the glass fiber may have a fibrous shape and may have cross-sections of various shapes, such as a circular cross-section, an oval cross-section, a rectangular cross-section, and the like. For example, glass fiber having circular and/or rectangular cross-sections may be preferable in terms of mechanical properties.

In some embodiments, the glass fiber having a circular cross-section may have a cross-sectional diameter of about 5 µm to about 20 µm and a pre-processing length of about 2 mm to about 20 mm, and the glass fiber having a rectangular cross-section (flat type) may have an aspect ratio (a ratio of a long-side length to a short-side length in cross-section) of about 1.5 to about 10, a short-side length of about 2 µm to about 10 µm in cross-section, and a pre-processing length of about 2 mm to about 20 mm. Within this range, the polycarbonate resin composition can have improved rigidity, formability, and the like.

In some embodiments, the glass fiber may be subjected to surface treatment with a typical surface treating agent. The surface treating agent may include a silane compound, a urethane compound, an epoxy compound, and the like, without being limited thereto.

In some embodiments, the glass fiber may be present in an amount of about 5 to about 30 parts by weight, for example, about 5 to about 20 parts by weight, relative to about 100 parts by weight of the base resin. If the content of the glass fiber is less than about 5 parts by weight relative to about 100 parts by weight of the base resin, the polycarbonate resin composition can suffer from deterioration in rigidity, chemical resistance, and the like, and if the content of the glass fiber exceeds about 30 parts by weight, the polycarbonate resin composition can suffer from deterioration in impact resistance, chemical resistance, and the like.

In some embodiments, a weight ratio of the polysiloxane-polycarbonate copolymer resin to the glass fiber may range from about 1:0.05 to about 1:5, for example, about 1:0.1 to about 1:3. Within this range, the polycarbonate resin composition can exhibit better properties in terms of impact resistance, chemical resistance, rigidity, and the like.

### (D) Polydimethylsiloxane containing a terminal reactive group

The polydimethylsiloxane containing a terminal reactive group according to one embodiment of the present invention serves to improve impact resistance, rigidity, chemical resistance, appearance characteristics, a balance of properties thereof, and the like of the polycarbonate resin composition, when used together with the polycarbonate resin, the polysiloxane-polycarbonate copolymer resin, and the glass fiber, and may include a polydimethylsiloxane containing a terminal reactive group and having a kinematic viscosity of about 5 cSt to about 200 cSt, as measured at 40°C in accordance with ASTM D445.

In some embodiments, the polydimethylsiloxane containing a terminal reactive group may have a kinematic viscosity of about 5 cSt to about 200 cSt, for example, about 10 cSt to about 100 cSt, as measured at 40°C in accordance with ASTM D445. If the kinematic viscosity of the polydimethylsiloxane containing a terminal reactive group is less than about 5 cSt, the polycarbonate resin composition can suffer from deterioration in thermal stability, moldability, impact resistance, and the like, and if the kinematic viscosity of the polydimethylsiloxane containing a terminal reactive group exceeds about 200 cSt, the polycarbonate resin composition can suffer from deterioration in transparency, moldability, and the like.

In some embodiments, the terminal reactive group of the polydimethylsiloxane may include at least one of a hydroxyl group, an epoxy group, and a maleic anhydride group.

In some embodiments, the polydimethylsiloxane containing a terminal reactive group may be present in an amount of about 0.1 to about 2 parts by weight, for example, about 0.2 to about 1.5 parts by weight, , specifically about 0.5 to about 1.5 parts by weight, relative to about 100 parts by weight of the base resin. If the content of the polydimethylsiloxane containing a terminal reactive group is less than about 0.1 parts by weight relative to about 100 parts by weight of the base resin, the polycarbonate resin composition can suffer from deterioration in chemical resistance, and the like, and if the content of the polydimethylsiloxane containing a terminal reactive group exceeds about 2 parts by weight, the polycarbonate resin composition can suffer from deterioration in impact resistance, appearance characteristics, and the like.

In some embodiments, a weight ratio of the polysiloxane-polycarbonate copolymer resin to the polydimethylsiloxane containing a terminal reactive group may range from about 1:0.005 to about 1:0.5, for example, about 1:0.01 to about 1:0.3. Within this range, the polycarbonate resin composition can exhibit better properties in terms of impact resistance, chemical resistance, appearance characteristics, and the like.

In some embodiments, a weight ratio of the glass fiber to the polydimethylsiloxane containing a terminal reactive group may range from about 1:0.01 to about 1:0.3, for example, about 1:0.05 to about 1:0.2. Within this range, the polycarbonate resin composition can exhibit better properties in terms of rigidity, chemical resistance, impact resistance, appearance characteristics, and the like.

The polycarbonate resin composition according to one embodiment of the present invention may further comprise typical additives, as needed. The additives may include, for example, flame retardants, antioxidants, release agents, lubricants, nucleating agents, antistatic agents, stabilizers, pigments, dyes, mixtures thereof, and the like. The additives may be present in an amount of about 0.001 to about 20 parts by weight, relative to about 100 parts by weight of the base resin, without being limited thereto.

The polycarbonate resin composition according to one embodiment of the present invention may be prepared by a typical method of preparing a polycarbonate resin composition. For example, the polycarbonate resin composition may be prepared in pellet form by mixing the aforementioned components, followed by melt extrusion at about 200°C to about 300°C, for example, at about 250°C to about 280°C, using a typical twin-screw extruder.

In some embodiments, the polycarbonate resin composition may have a notched Izod impact strength of about 14 kgf·cm/cm to about 30 kgf·cm/cm, for example, about 15 kgf·cm/cm to about 25 kgf·cm/cm, as measured on a 1/8" thick specimen in accordance with ASTM D256.

In some embodiments, the polycarbonate resin composition may have a flexural modulus of about 25,000 kgf/cm² or more, for example, about 27,000 kgf/cm² to about 50,000 kgf/cm², as measured on a 1/4" thick specimen at a rate of 2.8 mm/min in accordance with ASTM D790.

In some embodiments, the polycarbonate resin composition may have a fracture height of about 55 cm or higher, for example, about 58 cm to about 99 cm, at which a 2 mm thick specimen is broken upon application of impact with a drop test device using a 2 kg weight according to a DuPont drop test method after the specimen is immersed in a thinner solution for 2 minutes and 30 seconds, dried at 80°C for 20 minutes, and left at room temperature for 24 hours.

In some embodiments, the polycarbonate resin composition may have a time until cracking occurs on a surface of a specimen of about 60 min or more, for example, about 60 min to about 120 min, when 5 g of sunscreen (manufacturer: Nivea, product name: NNAH03055) is applied to a 1/8" thick Type I tensile specimen prepared in accordance with ASTM D638, and the specimen is left on a 1% strain curvature jig.

A molded article according to the present invention is formed from the polycarbonate resin composition. For example, the polycarbonate resin composition may be produced into various molded articles (products) by various molding methods, such as injection molding, extrusion molding, vacuum molding, casting molding, and the like. These molding methods are well known to a person having ordinary knowledge in the art. The molded article has excellent properties in terms of impact resistance, rigidity, chemical resistance, appearance characteristics, a balance of properties thereof, and the like, and can be advantageously used for interior or exterior materials for mobile electric/electronic products.

### [Mode for Invention]

Next, the present invention will be described in more detail with reference to some examples. It should be understood that these examples are provided for illustration only and are not to be construed in any way as limiting the present invention.

### EXAMPLE

Details of components used in Examples and Comparative Examples are as follows.

### (A) Polycarbonate resin

A bisphenol-A polycarbonate resin (weight average molecular weight (Mw): 22,000 g/mol) was used.

### (B) Polysiloxane-polycarbonate copolymer resin

A polysiloxane-polycarbonate copolymer resin containing 6 wt% of polydimethylsiloxane (PDMS) and having a weight average molecular weight (Mw) of 22,000 g/mol was used.

### (C) Glass fiber

(C1) Flat type cross-sectional glass fiber (Manufacturer: Nittobo, Product Name: CSG 3PA-832) was used.

(C2) Round type cross-sectional glass fiber (Manufacturer: Owens Corning, Product Name: 183F) was used.

### (D) Polydimethylsiloxane

(D1) Polydimethylsiloxane (kinematic viscosity: 40 cSt) having a terminal reactive group (hydroxyl group) was used.

(D2) Polydimethylsiloxane (manufacturer: Momentive Co. Ltd., product name: PDMS-200, kinematic viscosity: 40 cSt) was used.

### Examples 1 to 8 and Comparative Examples 1 to 7

The above components were mixed in amounts as listed in Tables 1, 2 and 3, followed by extrusion at about 260°C, thereby preparing a polycarbonate resin composition in pellet form. Here, extrusion was performed using a twin-screw extruder (L/D=36, diameter: 45 mm) and the prepared pellets were dried at about 80°C for 5 hours or more and injection-molded in a 6 oz. injection molding machine (molding temperature: about 320°C), thereby preparing specimens. The prepared specimens were evaluated as to the following properties by the following method, and results are shown in Tables 1, 2 and 3.

### Property Evaluation

(1) Notched Izod impact strength (unit: kgf·cm/cm): Notched Izod impact strength was measured on a 1/8" thick specimen in accordance with ASTM D256.
(2) Flexural modulus (unit: kgf/cm²): Flexural modulus was measured on a 1/4" mm thick specimen at a rate of 2.8 mm/min in accordance with ASTM D790.
(3) Chemical resistance (post-painting impact resistance): A 2 mm thick specimen was immersed in a thinner solution for 2 minutes and 30 seconds, dried at 80°C for 20 minutes, left at room temperature for 24 hours, and then subjected to impact with a drop test device using a 2 kg weight according to a DuPont drop test method to measure a fracture height (unit: cm), at which the specimen was broken.
(4) Chemical resistance: 5 g of sunscreen (manufacturer: Nivea, product name: NNAH03055) was applied to a 1/8" thick Type I tensile specimen prepared in accordance with ASTM D638, and the specimen was left on a 1% strain curvature jig. Then, the time until cracking occurred on a surface of the specimen was measured.
(5) Appearance evaluation: After an article of a pin-gate structure was molded at a barrel temperature of 320°C in an injection molding machine, a visual inspection was conducted to check for phase separation or gas marks near the gate. (∘: Absent, ×: Present)

**Table 1**

| | Example | | | |
|---|---|---|---|---|
| | 1 | 2 | 3 | 4 |
| (A) (wt%) | 95 | 65 | 5 | 65 |
| (B) (wt%) | 5 | 35 | 95 | 35 |
| (C1) (parts by weight) | 10 | 10 | 10 | 5 |
| (C2) (parts by weight) | - | - | - | - |
| (D1) (parts by weight) | 1 | 1 | 1 | 1 |
| (D2) (parts by weight) | - | - | - | - |
| Notched Izod impact strength (kgf·cm/cm) | 18 | 17 | 15 | 23 |
| Flexural modulus (kgf/cm²) | 31,500 | 31,200 | 30,100 | 28,500 |
| Fracture height (cm) | 68 | 75 | 65 | 92 |
| Cracking occurrence time (min) | 60 | 90 | 110 | 85 |
| Appearance evaluation | O | O | O | ○ |

| | | | | |
|---|---|---|---|---|
| *Parts by weight: parts by weight relative to 100 parts by weight of base resin (A+B) | | | | |

**Table 2**

| | Example | | | |
|---|---|---|---|---|
| | 5 | 6 | 7 | 8 |
| (A) (wt%) | 65 | 65 | 65 | 65 |
| (B) (wt%) | 35 | 35 | 35 | 35 |
| (C1) (parts by weight) | 20 | - | 10 | 10 |
| (C2) (parts by weight) | - | 10 | - | - |
| (D1) (parts by weight) | 1 | 1 | 0.5 | 1.5 |
| (D2) (parts by weight) | - | - | - | - |
| Notched Izod impact strength (kgf·cm/cm) | 16 | 18 | 16 | 17 |
| Flexural modulus (kgf/cm²) | 42,000 | 33,500 | 32,500 | 31,000 |
| Fracture height (cm) | 58 | 75 | 72 | 75 |
| Cracking occurrence time (min) | 95 | 85 | 85 | 90 |
| Appearance evaluation | O | O | O | ○ |

| | | | | |
|---|---|---|---|---|
| *Parts by weight: parts by weight relative to 100 parts by weight of base resin (A+B) | | | | |

**Table 3**

| | Comparative Example | | | | | | |
|---|---|---|---|---|---|---|---|
| | 1 | 2 | 3 | 4 | 5 | 6 | 7 |
| (A) (wt%) | 2 | 98 | 65 | 65 | 65 | 65 | 65 |
| (B) (wt%) | 98 | 2 | 35 | 35 | 35 | 35 | 35 |
| (C1) (parts by weight) | 10 | 10 | 1 | 35 | 10 | 10 | 10 |
| (C2) (parts by weight) | - | - | - | - | - | - | - |
| (D1) (parts by weight) | 1 | 1 | 1 | 1 | 0.01 | 3 | - |
| (D2) (parts by weight) | - | - | - | - | - | - | 1 |
| Notched Izod impact strength (kgf·cm/cm) | 12 | 17 | 29 | 12 | 15 | 12 | 15 |
| Flexural modulus (kgf/cm²) | 29,200 | 32,100 | 19,200 | 55,700 | 33,500 | 28,500 | 29,500 |
| Fracture height (cm) | 45 | 32 | 120 or higher | 12.5 | 53 | 76 | 48 |
| Cracking occurrence time (min) | 110 | 5 | 55 | 95 | 15 | 90 | 60 |
| Appearance evaluation | O | O | O | ○ | ○ | × | × |

| | | | | | | | |
|---|---|---|---|---|---|---|---|
| *Parts by weight: parts by weight relative to 100 parts by weight of base resin (A+B) | | | | | | | |

It could be seen that the polycarbonate resin composition according to the present invention exhibited excellent properties in terms of impact resistance (notched Izod impact strength), rigidity (flexural modulus), chemical resistance (fracture height, cracking occurrence time), appearance characteristics (appearance evaluation), a balance of properties thereof, and the like.

Conversely, it could be seen that the resin composition of Comparative Example 1 prepared using an insufficient amount of the polycarbonate resin and an excess of the polysiloxane-polycarbonate copolymer resin suffered from deterioration in impact resistance, chemical resistance, and the like, and the resin composition of Comparative Example 2 prepared using an excess of the polycarbonate resin and an insufficient amount of the polysiloxane-polycarbonate copolymer resin suffered from deterioration in chemical resistance, and the like. It could be seen that the resin composition of Comparative Example 3 prepared using an insufficient amount of the glass fiber suffered from deterioration in rigidity, chemical resistance, and the like, and the resin composition of Comparative Example 4 prepared using an excess of the glass fiber suffered from deterioration in impact resistance, chemical resistance, and the like. In addition, it could be seen that the resin composition of Comparative Example 5 prepared using an insufficient amount of the polydimethylsiloxane containing a terminal reactive group suffered from deterioration in chemical resistance and the like, and the resin composition of Comparative Example 6 prepared using an excess of the polydimethylsiloxane containing a terminal reactive group suffered from deterioration in impact resistance, appearance characteristics, and the like, and the resin composition of Comparative Example 7 prepared using the polydimethylsiloxane (D2) instead of the polydimethylsiloxane containing a terminal reactive group according to the present invention suffered from deterioration in chemical resistance, appearance characteristics, and the like.

Although some embodiments have been described herein, it will be understood by those skilled in the art that various modifications, changes, and alterations can be made without departing from the spirit and scope of the present invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A polycarbonate resin composition comprising:
about 100 parts by weight of a base resin comprising about 4 wt% to about 96 wt% of a polycarbonate resin and about 4 wt% to about 96 wt% of a polysiloxane-polycarbonate copolymer resin;
about 5 to about 30 parts by weight of glass fiber; and
about 0.1 to about 2 parts by weight of a polydimethylsiloxane containing a terminal reactive group and having a kinematic viscosity of about 5 cSt to about 200 cSt, as measured at 40°C in accordance with ASTM D445.

2. The polycarbonate resin composition according to claim 1, wherein the polycarbonate resin has a weight average molecular weight of about 10,000 g/mol to about 200,000 g/mol, as measured by gel permeation chromatography (GPC).

3. The polycarbonate resin composition according to claim 1 or 2, wherein the polycarbonate-polysiloxane copolymer resin comprises about 70 wt% to about 99 wt% of a polycarbonate block and about 1 wt% to about 30 wt% of a polysiloxane block.

4. The polycarbonate resin composition according to any one of claims 1 to 3, wherein the polycarbonate-polysiloxane copolymer resin has a weight average molecular weight of about 10,000 g/mol to about 50,000 g/mol, as measured by gel permeation chromatography (GPC).

5. The polycarbonate resin composition according to any one of claims 1 to 4, wherein the terminal reactive group of the polydimethylsiloxane comprises at least one of a hydroxyl group, an epoxy group, and a maleic anhydride group.

6. The polycarbonate resin composition according to any one of claims 1 to 5, wherein a weight ratio of the polysiloxane-polycarbonate copolymer resin to the glass fiber ranges from about 1:0.05 to about 1:5.

7. The polycarbonate resin composition according to any one of claims 1 to 6, wherein a weight ratio of the polysiloxane-polycarbonate copolymer resin to the polydimethylsiloxane containing a terminal reactive group ranges from about 1:0.005 to about 1:0.5.

8. The polycarbonate resin composition according to any one of claims 1 to 7, wherein a weight ratio of the glass fiber to the polydimethylsiloxane containing a terminal reactive group ranges from about 1:0.01 to about 1:0.3.

9. The polycarbonate resin composition according to any one of claims 1 to 8, wherein the polycarbonate resin composition has a notched Izod impact strength of about 14 kgf·cm/cm to about 30 kgf·cm/cm, as measured on a 1/8" thick specimen in accordance with ASTM D256.

10. The polycarbonate resin composition according to any one of claims 1 to 9, wherein the polycarbonate resin has a flexural modulus of about 25,000 kgf/cm² or more, as measured on a 1/4" thick specimen at a rate of 2.8 mm/min in accordance with ASTM D790.

11. The polycarbonate resin composition according to any one of claims 1 to 10, wherein the polycarbonate resin composition has a fracture height of about 55 cm or higher, at which a 2 mm thick specimen is broken upon application of impact with a drop test device using a 2 kg weight according to a DuPont drop test method after the specimen is immersed in a thinner solution for 2 minutes and 30 seconds, dried at 80°C for 20 minutes, and left at room temperature for 24 hours.

12. The polycarbonate resin composition according to any one of claims 1 to 11, wherein the polycarbonate resin composition has a time until cracking occurs on a surface of a specimen of about 60 min or more, when 5 g of sunscreen (manufacturer: Nivea, product name: NNAH03055) is applied to a 1/8" thick Type I tensile specimen prepared in accordance with ASTM D638, and the specimen is left on a 1% strain curvature jig.

13. A molded article formed from the polycarbonate resin composition according to any one of claims 1 to 12.
